# EUROPEAN PATENT SPECIFICATION

(11) **EP 1 768 774 B1**
(45) Date of publication and mention of the grant of the patent: **27.02.2008**
(21) Application number: 05752431.6
(22) Date of filing: 13.05.2005
(51) Int. Cl.: B01J 13/00, F41H 1/02, F42D 5/045

(54) **IMPROVED COLLOIDAL GEL FOR PROTECTIVE FABRIC, IMPROVED PROTECTIVE FABRIC AND METHOD OF PRODUCING BOTH**
VERBESSERTES KOLLOIDALES GEL FÜR SCHÜTZENDES TEXTILES FLÄCHENGEBILDE, VERBESSERTES SCHÜTZENDES TEXTILES FLÄCHENGEBILDE UND HERSTELLUNGSVERFAHREN DAFÜR
GEL COLLOIDAL AMELIORE POUR TISSU DE PROTECTION, TISSU DE PROTECTION AMELIORE ET PROCEDE DE PRODUCTION DES DEUX

(43) Date of publication of application: 04.04.2007
(73) Proprietor: Protectron Nanocomposites Pte Ltd, Singapore 048621 (SG)
(72) Inventor: LIM, Chee Seng, Norman, Singapore 348578 (SG)
(74) Representative: Howe, Steven
(86) International application number: PCT/SG2005/000150
(87) International publication number: WO 2006/121411

(56) References cited:
- JP-A- 3 293 003
- US-A- 3 398 007

## Description

### Background and Field of the Invention

This invention relates to an improved colloidal gel for applying to an improved fabric and also to an improved protective fabric, more particularly but not exclusive, for use as clothing for protection against stab or ballistic injuries.

Protective fabric in the form of body armour has gained widespread use by law enforcement officers, military personnel, security forces and aid workers to prevent ballistic and stab/cut injuries from attacks with weapons such as guns, knives, daggers etc.

Conventional body armour typically employs layers of woven aramid fibre (commonly known by their tradename: Kevlar®, Twaron®) and although this might offer sufficient resistance to cuts, the fabric may not offer sufficient protection against stab or needle-like punctures, particularly if the armour is specifically designed to protect against certain calibrated ballistic threats. Thus, for increased protection, the armour is reinforced with metal, chainmail, plastics or ceramic plate inserts but this makes the armour bulky and heavy, thus limiting such armours to torso or head protection since employing such armour at other extremities of the user such as arms, legs, hands and neck would impede the user's mobility and increase fatigue.

Recently, advancements have been made to utilise "shear thickening fluid" as a form of body armour as explained in the publication "Stab resistance of shear thickening fluid (STF) - Kevlar® composites for body armour applications" by R.G. Egress, M.J. Decker, C.J. Halbach, Y.S. Lee, J.E. Kirkwood, K.M. Kirkwood, E.D. Wetzel and N.J. Wagner, to appear in the proceedings of the 24th Army Science Conference. Orlando, FL Nov. 29-Dec 2, 2004. As explained in that document, a shear thickening fluid has concentrated colloidal suspensions comprising solid particles dispersed in a liquid medium which exhibits reversible shear thickening resulting in large increases in viscosity above a critical shear rate or applied stress. Thus, when a protective fabric with microfibres, such as Kevlar® is treated with the fluid, under normal operating conditions, the fluid behaves like a liquid offering flexibility of manoeuvre to the user. However, under high stress or shear rate such as a ballistic impact from a bullet, the liquid transits into a solid-like material due to the increase viscosity of the fluid thus protecting the user from harm.

The current technique of producing STF uses silica particles (or otherwise known as silicon dioxide) dispersed in ethylene glycol or polyethylene glycol as the carrier liquid or liquid medium. Concentration by volume of one part glycol with 50-65 % of silica particle concentration can be achieved. The STF is then diluted with a solvent typically ethanol or methanol and used to wet the Kevlar® fabric. Thereafter, the wet fabric is then oven heated to evaporate the solvent resulting in the STF impregnated Kevlar®. However, such impregnated Kelvar® is not without limitations. For example, it is not resistant to all weather conditions and the particle concentration does not offer adequate protection for higher ballistic impacts.

It is an object of the present invention to provide a protective fabric and method of producing the same which alleviates at least one of the disadvantages of the prior art and/or to provide the public with a useful choice.

### Summary of the Invention

In general terms, in a first expression, the present invention proposes adding a solvent to aid the dispersion of colloidal particles in a liquid medium when forming a colloidal gel for producing protective fabrics. In a second expression, the present invention proposes the use of a sealing fluid to serve as a hydrophobic protective layer for the protective fabric.

In a first aspect of the invention, there is provided a method of producing a colloidal gel for protective fabrics, the method comprising the steps of:
i) dispersing an amount of colloidal particles in a carrier liquid to form a colloidal suspension;
ii) diluting the colloidal suspension; and
iii) adding further colloidal particles which are dispersed to form a colloidal gel which has a higher concentration of dispersed colloidal particles than the suspension prior to dilution.

An advantage of the described embodiment of the invention is that diluting the suspension allows more colloidal particles to be suspended in the carrier liquid thus increasing the particle count in the colloidal gel. When a protective fabric is impregnated with such a gel, it provides a stronger protection.

Preferably, at step (i), the colloidal particles are dispersed at varying speeds which has an advantage of performing the dispersion more effectively and a higher concentration of colloidal particles can be achieved. The liquid may be dispersed at a first speed as the particles are added until a predetermined stage is reached; and then the liquid may be dispersed at a second speed without further adding of the particles, wherein the second speed is higher than the first speed. In the alternative, when the predetermined stage is reached, the liquid may be dispersed without further adding of the particles for an amount of time before dispersing at the second speed.

The method may further comprise the step of dispersing the liquid at a third speed after dispersing at the second speed for an amount of time, the third speed being higher than the second speed. Preferably, dispersion at the first, second and third speeds are repeated until the desired amount of colloidal particles are all dispersed in the carrier liquid.

Advantageously, at step (iii), the method disperses the colloidal particles at a speed higher than the dispersing step (i).

The amount of colloidal particles to be dispersed at step (I) may be the maximum amount of colloidal particles that can be dispersed in the carrier liquid prior to dilution step (ii).

Preferably, the dispersing steps (i) and (iii) include shearing the carrier liquid and the colloidal particles. Alternatively, the dispersing steps may be carried out using ultrasonic waves.

Advantageously, the total amount of colloidal particles added in relation to the carrier liquid is between 66% and 75% in weight which would provide an improved concentration of the colloidal particles in the carrier liquid.

Preferably, the colloidal particles have aggregate sizes of 0.2 to 0.35 microns.

The carrier liquid may have a molecular weight of between 100 and 300 and may be selected from the group comprising polyethylene glycol and ethylene glycol.

Preferably, the diluting step includes adding a co-solvent to the suspension which is between 100% to 300% of the volume of the carrier fluid. The co-solvent may be ethanol or methanol.

Typically, aramid fabric is used as the protective fabric.

Advantageously, the method further comprises the step of coating the colloidal particles with silicone fluid prior to the particles being dispersed at steps (i) and (iii). The coated silicone fluid helps to reduce hydrolysis when a fabric is impregnated with the colloidal gel.

The present invention also relates to a method of producing protective fabrics comprising the step of: impregnating a fabric with a colloidal gel produced by the above explained method. The method of producing the protective fabric may include the steps of: diluting the colloidal gel, wetting the fabric with the diluted fluid, and drying the fabric to remove the co-solvent from the fabric. Preferably, the fabric is dried using a hot air blower. The colloidal gel may be diluted with up to three parts of solvent for wetting the fabric.

According to a second aspect of the invention, there is provided a method of producing protective fabric impregnated with colloidal gel, the method comprising the step of wetting the fabric with a sealing liquid selected from a group comprising dimethyldichlorosilane, hexamethyldisilazane and silicone fluids. This has an advantage of creating a "humi-shield" to make the fabric hydrophobic. The silicone fluid may be a dimethyl silicone fluid.

According to a third aspect of the invention, there is provided a method of preparing a colloidal gel having colloidal particles dispersed in a carrier liquid, the method comprising the steps of: coating the colloidal particles with a hydrophobic sealing fluid; adding the coated colloidal particles to the carrier liquid; and dispersing the carrier liquid to suspend the colloidal particles in the carrier liquid. This "pre-treatment" coats a layer of hydrophobic sealing fluid thus lowering the risk of hydrolysis when a fabric is impregnated with the gel.

According to a fourth aspect of the invention, there is provided a method of producing a colloidal gel for protective fabrics from a colloidal suspension having an amount of colloidal particles dispersed in a carrier liquid, the method comprising the steps of:
diluting the colloidal suspension;
adding further colloidal particles to the diluted suspension; and
dispersing the further colloidal particles to form a colloidal gel with a higher concentration of dispersed colloidal particles than the suspension prior to dilution.

The colloidal gel produced above can be used for producing protective fabric by impregnating the fabric with the colloidal gel. The protective fabric can be used in numerous applications for example, a stab or bullet resistant vest can comprise such a protective fabric. Also, a vehicle or an aircraft can comprise such a protective fabric to protect the necessary protection.

Advantageously, the protective fabric may be impregnated with the colloidal gel may have suspended particles of more than 65% by weight Preferably, the suspended particles may be between 66% to 75% by weight. More preferably, the suspended particles may be between 66% to 69%, 70% to 75%, or 68% to 73% by weight.

Preferably, the protective fabric may be impregnated with colloidal gel comprising a sealing liquid selected from a group comprising dimethyldichlorosilane, hexamethyldisilazane and silicone fluids. In this way, the protective fabric can be made hydrophobic.

### Brief Description of the Drawings

Embodiments of the invention will now be described, by way of example, with reference to the accompanying drawings in which,
Figure 1 is a schematic view of a silica particle's surface having hydroxyl groups;
Figure 2 is a schematic view showing bonding of hydrogen between adjacent hydroxyl groups of the silica molecule of Figure 1;
Figure 3 is a microscopic view of three silica particles showing more bonding between hydroxyl groups;
Figure 4 illustrates a mixer for producing a colloidal gel according to the preferred embodiment of the present invention;
Figure 5 illustrates an equilibrium state of silica having clusters of agglomerates when particles are added to a glycol carrier liquid according to the a first embodiment of the present invention;
Figure 6 illustrates dispersion of the clusters in Figure 5 after shearing;
Figure 7 illustrates formation of partial aggregate and agglomerate networks when a solvent is added to the glycol carrier liquid during the dispersion of the silica particles;
Figure 8 illustrates agglomerate networks of closer proximity than Figure 7 after the co-solvent is evaporated from the fabric;
Figure 9 is a roller press arrangement for producing a protective fabric in accordance with a first embodiment of the present invention;
Figure 10 is a variation of the roller press arrangement of Figure 9 with the addition of a spray device and a further hot air blower which is used in a second embodiment of the present invention;

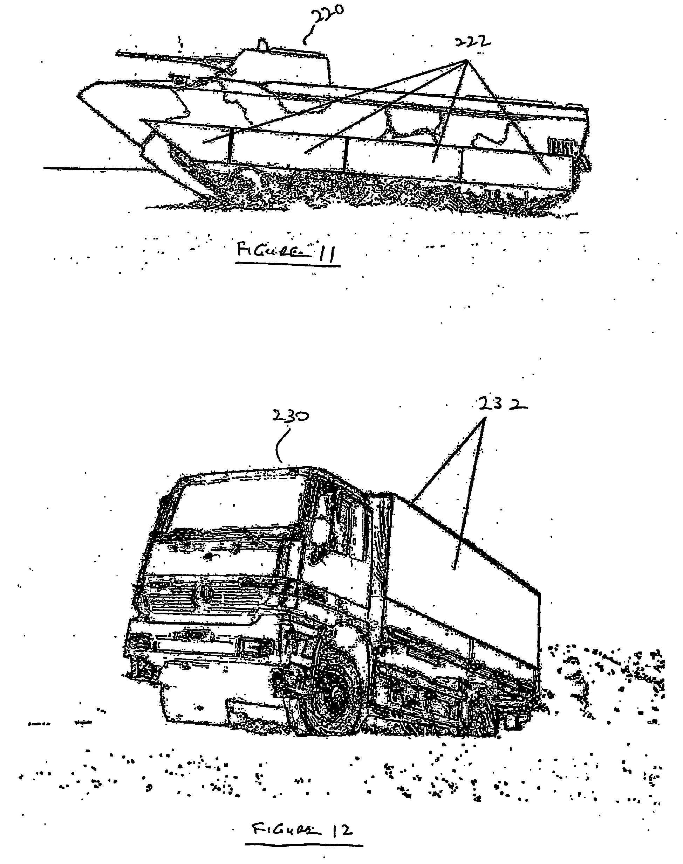

Figures 11 to 15 illustrate applications of the protective fabric produced in accordance with the preferred embodiment of the present invention.

### Detailed Description of the Preferred Embodiment

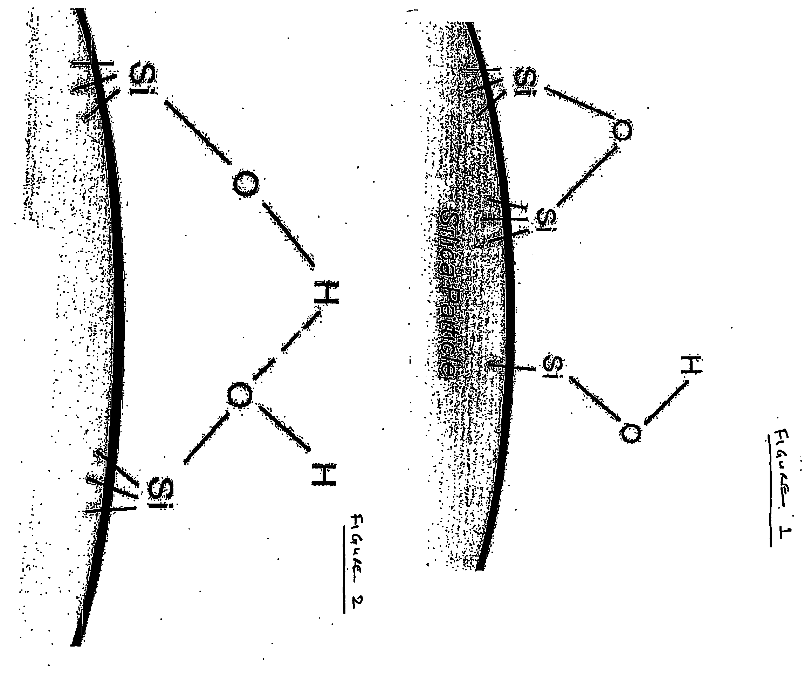

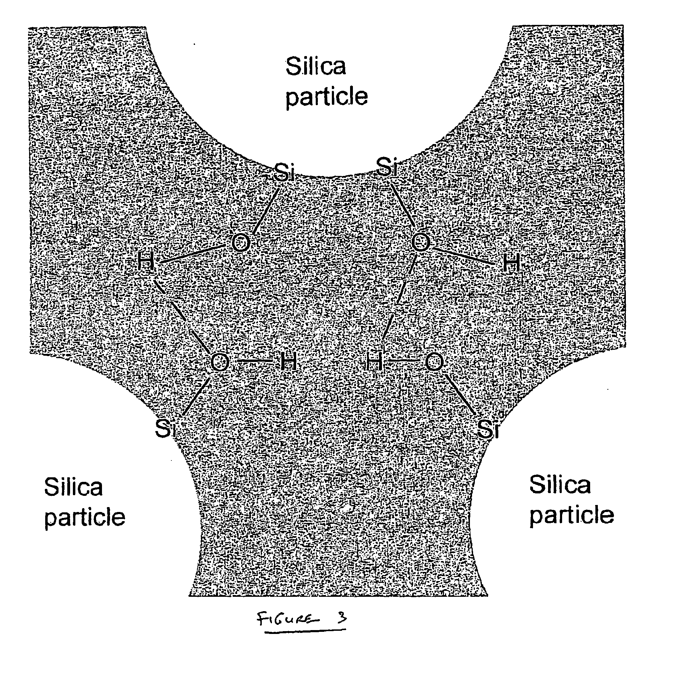

Figure 1 shows a typical microscopic surface chemistry schematic of a silica particle which is typically almost 40% covered by hydroxyl groups making silica hydrophilic. The hydroxyl groups on the molecule's surface tend to bond with each other as shown in Figure 2. Further, there is also a tendency of hydroxyl groups from adjacent silica molecules to bond with each other as shown in Figure 3. At lower concentrations of silica particle to the glycol carrier fluid, some hydroxyl groups are not attached to the carrier fluid. The situation is further aggravated with the use of alcohol as the solvent and since all three elements introduces hydroxyl groups that would increase the likelihood that some of the silica particle's or glycol's hydroxyl, which are all hygroscopic in nature, can absorb moisture from the environment, thus increasing the risk of aramid fabric degradation over time due to hydrolysis.

In a first embodiment of the present invention, silica particles having aggregate size of 0.2 to 0.35 microns are used as the colloidal particles. The silica particles are first pre-treated with a sealing liquid and in this embodiment, dimethyl siloxane fluid is used to make the particles hydrophobic.

The pre-treatment forms a coating of dimethyl siloxane fluid around the particles thus isolating the hydroxyl groups on the surfaces of the silica particles. This acts to prevent the hydroxyl groups to bond with those from the aramid fibres making them hygroscopic, thus reducing hydrolysis risks. This enhances the resistance of the fabric to moisture and serves to prolong the serviceability of the fabric.

The preparation of a colloidal gel (or shear thickening fluid as mentioned in the background section) according to the first embodiment will now be described.

In the present embodiment, polyethylene glycol is selected as a carrier fluid. Depending on application, glycol of molecular weight of 100 to 300 is used and in the present embodiment, the glycol is measured and weighted to about 200 molecular weight.

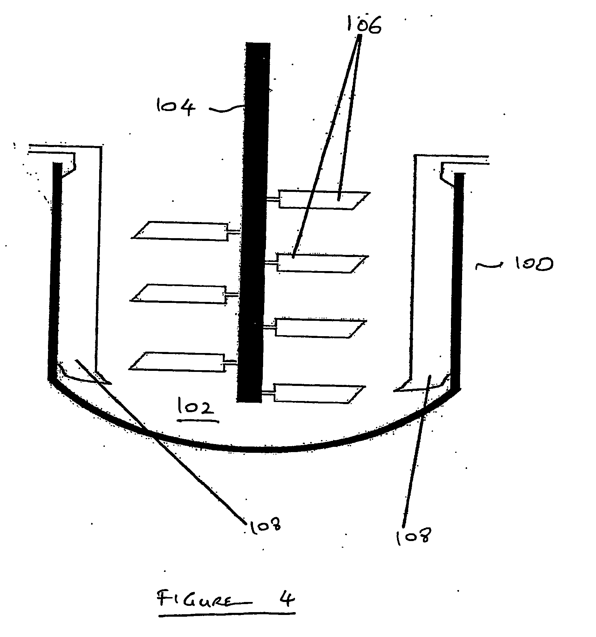

The measured glycol is then poured into a variable speed mixer 100, an example of which is shown in Figure 4. The mixer 100 has a mixing bowl 102 to receive the glycol and a rotating shaft 104 supporting a plurality of high carbon steel shearing blades 106 arranged inside the mixing bowl with the leading cutting edges tilted to face downwards with an offset angle of up to 10 degrees to the horizontal plane.102. The mixer 100 also has counter rotating scrapers 108 (i.e. the scrappers rotate in a reverse direction to the blades 106) arranged on the inside of the bowl 102 so as to ensure thorough and homogenous blending at higher speeds of mixing superior to commercially available high intensity mixers.

The pre-treated silica particles are measured in weight preferably in the range of 66% to 80% in relation to the carrier fluid, and in the present embodiment, about 70% is used. The range is selected so that the final percentage by volume of the particles in the colloidal gel is above 65%.

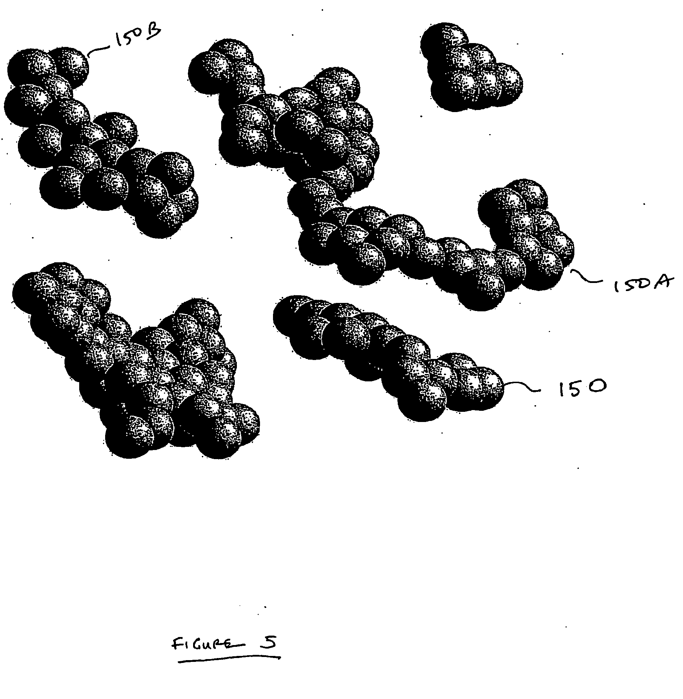

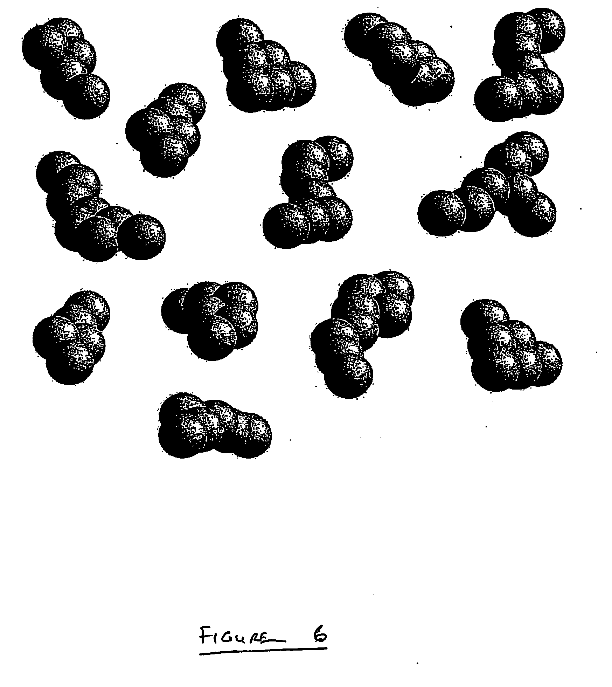

The dispersion of the silica is conducted over a few phases with a first phase consisting of adding the particles slowly into the carrier fluid with the shaft rotating at low speeds of 15 to 50 rpm. When the silica particles are added to the glycol carrier fluid, it exhibits a state as shown in Figure 5 illustrating macroscopic groups or clusters called agglomerates 150. Some of the agglomerates attach with each other to form even larger agglomerates (compared the agglomerates indicated by reference characters 150, 150A and 150B). The adding of the particles continues until the particles and the carrier fluid mixture forms a light grey lumpy dough. When this stage is reached, in a second phase, the adding of particles is ceased and the mixer is allowed to chum the dough for one to two minutes. Thereafter, in a third phase, the speed of the mixer 100 is turned up progressively to 1000rpm and then 2000rpm to attain a solution indicating a reduced viscosity as the particles are dispersed in the carrier fluid by the shearing blades. The state of the particles when a solution is formed is shown in Figure 6 illustrating the agglomerates of Figure 5 being dispersed to form smaller clusters termed as aggregates 152.

Subsequently, phases one, two and three are repeated until a stage when no more particles can be added due to the increased number of particles suspended in the fluid.

Due to the dimethyl silicon fluid pre-treatment, the dispersion of the treated particles with the carrier fluid can be difficult particularly due to the high particle count proposed in the present embodiment. A co-solvent in the form of ethanol is used to aid the mixing and dispersion process. It should be apparent that other organic solvents such as methanol can be used but ethanol is preferred due to its lower toxicity level.

In a fourth phase, the ethanol is added together with the silica particles with the mixer 100 adjusted to a higher speed of one minute and thereafter, to an even higher speed of 3000 rpm until a thin homogenous light grey gel is formed.

The mixer is returned to a lower speed of between 15 to 50 rpm, similar to the speed at the initial starting phase (i.e. first phase). The process is then repeated with more particles being added until the mixture forms a light grey lumpy dough again. More ethanol as the co-solvent is added and the mixer 100 is again adjusted to a higher speed progressively until the mixture forms a homogenous gel again. The same process is repeated until all the particles are mixed into the carrier fluid. However, it should be noted that preferably, no more than 300% of the volume of the co-solvent relative to the carrier fluid should be added in total. This is to avoid over concentration of particles in the preparation of the gel, resulting in some of the excess particles not being suspended in the carrier fluid when the co-solvent is subsequently removed.

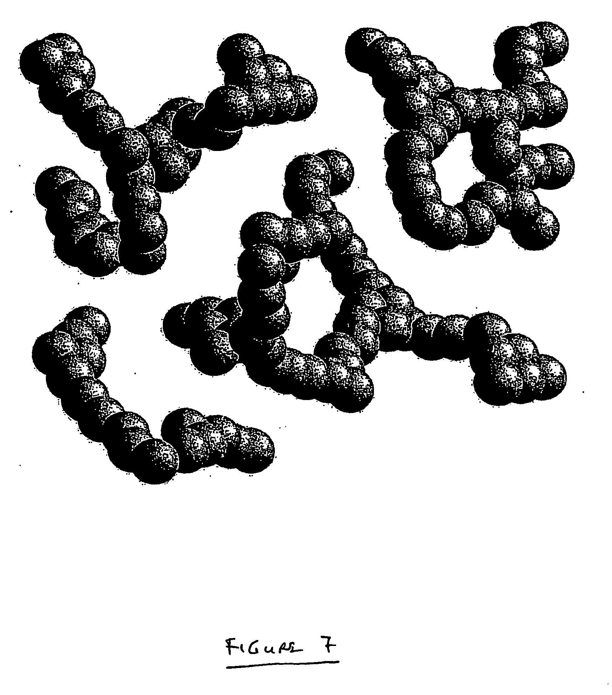

After the above steps, the mixture or gel has a very well dispersed particle structure which is illustrated at equilibrium in Figure 7 and the preparation of the colloidal gel is completed and ready to be applied to a fabric.

In the present embodiment, two methods will be described for applying the colloidal gel to a fabric: rolling press and spraying.

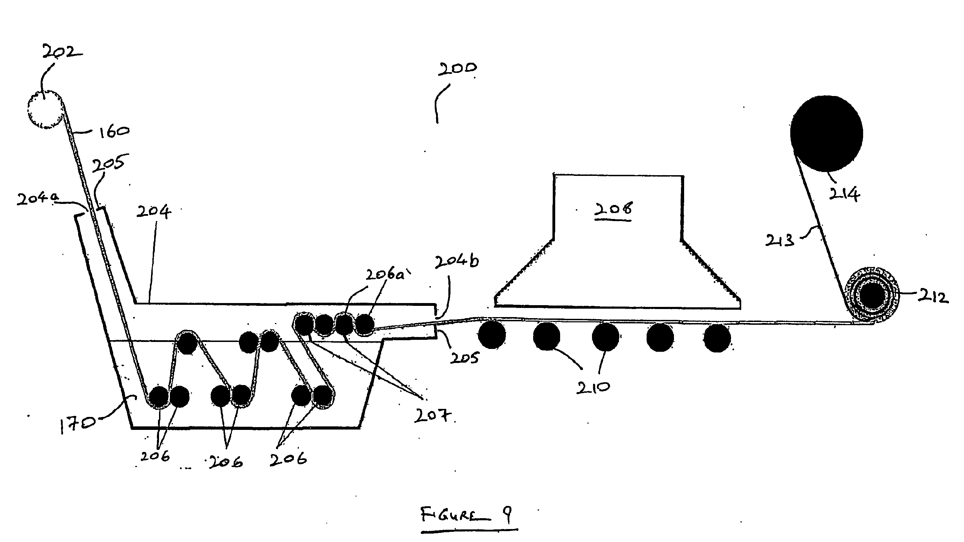

Figure 9 shows an arrangement of a roller press apparatus 200 to perform the first of the two methods. The apparatus 200 has a roller feeder 202 arranged to introduce fabric to be impregnated with the shear thickening liquid and in this embodiment, Kevlar® 160 is used. The apparatus 200 includes an immersion tank 204 having an inlet opening 204a and an outlet opening 204b for allowing the fabric 160 into and out of the tank 204. Preferably, rubberised flaps 205 cover the openings or are positioned to create a narrow slit just sufficient for the fabric to pass through as shown in the figure. This helps to reduce evaporation of the solvent thus preventing thickening of the colloidal fluid.

The apparatus 200 also includes a network of rollers 206 disposed in the immersion tank 204. Roller speed is controlled via motors (not shown) and the amount of pressure applied on the fabric 160 between the pairs of rollers 206 is adjusted by positioning of the roller pairs. The speed and amount of pressure determines how much colloidal fluid is being applied onto the fabric.

Adjacent to the immersion tank 204 is a hot air blower 208 positioned above a series of transport rollers guiding the fabric to a collection roll 212.

To begin the impregnation process, the colloidal gel prepared in accordance with the earlier described method is diluted with up to three parts ethanol and the diluted gel 170 is poured into the immersion tank 204 of the rolling press apparatus 200.

The Kevlar® fabric160 to be treated is fed via the roller feeder 202 and introduced into the immersion tank 204 to be wetted by the diluted shear thickening fluid 170 and passed through the network of rollers 206, some of which are submerged in the fluid 170. As shown in Figure 9, most of the rollers are paired and arranged to apply a desired pressure so as to force air or air bubbles out of the fabric during the wetting process to aid the impregnation process.

The speed of rotation of the rollers 206 and the proximity between roller pairs are adjusted to ensure thorough "wetting through" or impregnation of the Kevlar® fabric 160. An indication of complete impregnation is a translucent tint in the fabric 160 which is a darkening shade of the original natural colour of the fabric.

The network of rollers 206a includes some rollers 206a arranged above the diluted gel 170 and is used to remove excess gel. Preferably, the rollers 206a have flexible scrappers 207 for scrapping excess gel as the rollers turn causing the gel to fall by gravity to the tank 204 to prevent their re-entry into the fabrics.

The wet Kevlar® 160 is next directed out of the tank 204 by the series of transport rollers 210 so that the fabric passes under the hot air blower 208 having a temperature between 50 to 70 degrees Celsius to dry the solvent. Care should be taken to ensure that the surface temperature of the fabric does not exceed 90 degrees Celsius to prevent damage to the gel. Of course, this step also removes, by evaporation, the solvent used during the dispersion of the particles in the glycol carrier fluid.

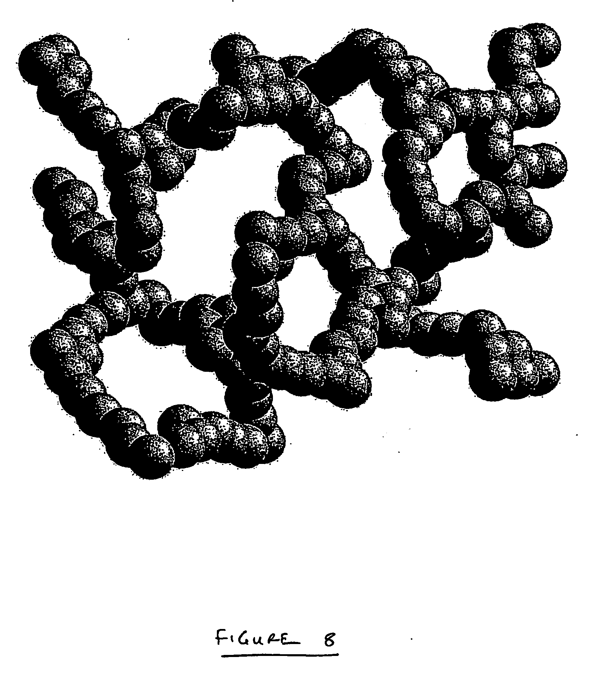

After drying, the Kevlar® has colloidal gel impregnated within the structure of the fabric and an example of the arrangements of the silica particles is illustrated in Figure 8. The completed fabric is collected by the motorised collection feeder 212. As shown in Figure 9, a corresponding paper feeder roller 214 is used to introduce wax paper 213 so the paper is sandwiched between layers of the completed fabric as the collection roll rotates to form a transportable roll. The use of the paper prevents the fabric surface from sticking to each other and alleviates surface damage due to friction during transportation. It also prevents degrading the appearance of the fabric.

For storage purposes, the rolls of impregnated Kevlar® fabric are vacuum-sealed in black polyethylene bags to prevent moisture absorption by the colloidal gel, which is still hygroscopic but to a lower extent than the prior art. The use of black opaque bags also protects the fabric from ultraviolet radiation which leads to fabric degradation if the fabric is made up of aramid fibres.

A second of the two methods is spraying and the set-up is generally similar to what is illustrated in Figure 9. The difference is that the fabric 160 is not soaked or submerged in the fluid 170 but instead the tank 204 is adapted with a series of spray devices spraying the diluted fluid 170. The fabric 160 is similarly directed into the tank 204 and is passed through the nozzles of the spraying devices to wet the fabric. The network of rollers 206 can similarly be used to force air bubbles out of the fabric to aid the impregnation process. After wetting, the other process steps are similar to the roller press method.

It would be appreciated that the above described method of producing protective fabric has numerous advantages. The silica content dispersed in the carrier fluid is increased due to the proposed saturation method achieved by the introduction of the co-solvent during the dispersion process and the use of a variable speed multi-blade mixer to selectively disperse the silica particles. After the co-solvent is extracted a higher concentration of silica particles of more than 65% by volume and more specifically between 66% to 80% by weight, and a lower concentration of suspension fluid per unit area of the fabric can be achieved. By increasing the particle count, more structural strength is added to the fabric in terms of colloidal reactive force than can be generated via negative normal forces upon compression when compared to the prior art. This increases the performance of the fabric particularly the fabric's resistance to ballistic or stab threats.

As explained earlier, the carrier fluid used in the preparation of the colloidal gel contains hydroxyl groups and is hydrophilic and hygroscopic in nature. The use of the present proposed method lowers its concentration in the final product thus lowering the risk of hydrolysis. The pre-coating of the silica particles can be selected from a group comprising dimethyldichlorosilane, hexamethyldisilazane and dimethyl silicone fluids since these fluids reduces silica's natural hygroscopic tendencies, further lowering the risk of hydrolysis to the aramid fibre. However, dimethyl silicone fluid is preferred due to its higher retention of shear thickening properties.

The method described in the first embodiment proposes a "super" saturation formulation to ensure good and thorough impregnation of ceramic particles to the fabric which is not achievable by known prior art methods (the range of the prior art is between 50-65% by weight).

With a lower concentration of the colloidal gel without compromising flexibility, the protective fabric is lighter with similar amount of, if not, more silica particles bonded to the surfaces of the fibres or trapped between them via initial capillary action during impregnation process of the fabric.

Another advantage of described embodiment is that the protective fabric produced in accordance with the currently proposed method requires a shorter reaction time from ballistic/stab impact to colloidal reactance of the colloidal particles. The reason is that there is less carrier fluid present in the fabrics and thus the colloidal particles have less inter-particle space to move and macroscopically compress before negative normal forces reacts to the force applied on it. The aggregates and agglomerates of silica particles in the colloidal gel are more closely packed than that of the prior art and have little space between them. In experiments conducted to show the effectiveness, it has been observed that silica particles is forced out of the carrier fluid to form what we called "forced colloidal precipitation" in the form of white silica powder which demonstrates the compactness of the particles in the fluid. Such compactness promotes quick particle locking and forced precipitation allows effective dissipation of the impact, thus improving the shock absorption character of the shear thickening fluid made with this method.

Further, the method of impregnation described here can be repeated or even calibrated since it uses mechanical devices (e.g. rollers and variable speed motors to control the mixer) which can be adjusted to fine-tune the process.

The use of the hot air blower 208 instead of an oven promotes quick evaporation via temperature and air movement, making commercial exploitation scalable.

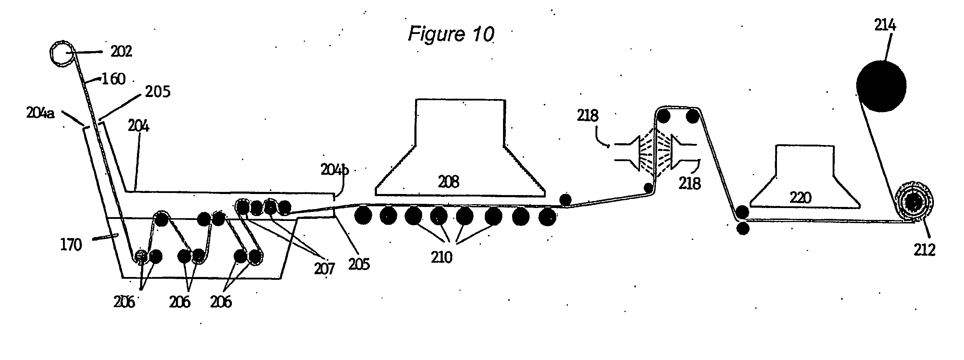

The inventor envisages that the protective fabric can also be made hydrophobic without the pre-treatment step, which actually forms a second embodiment of the present invention. To elaborate, the step of treating the silica particles with dimethyl silicone fluid is obviated with the untreated silica particles weigh and measured similar to what is suggested for treated particles, although it should be noted that, to achieve the same concentration, the weight for treated particles should be 2-4% less than the untreated (i.e. amorphous) particles to account for the added weight of the treatment silicone fluid. The weighed silica particles are similarly added to a mixer 100 of Figure 4 containing the glycol carrier fluid and dispersed as suggested in the first embodiment until the lumpy dough can no longer be sheared into a liquid. Thereafter, a co-solvent of up to 150% of the volume of the carrier fluid can be added to assist the dispersion of more silica particles in the carrier fluid to form a concentrated colloidal gel similar to the first embodiment. The application of the gel in accordance with the second embodiment is shown in Figure 10 which is similar to the first embodiment of Figure 99 except with the addition of spray nozzles 218 and a second hot air blower 220. The fabric to be impregnated with the colloidal gel is similarly soaked and then dried by the first blower 208 to remove the solvent. Thereafter, the fabric passes through the spray nozzles 218 directing dimethylsiloxane onto the fabric on both surfaces. This creates a "humidity-shield" coating on the fabric which is subsequently dried by the second hot air blower 220 having the same heating temperature as the first blower 208. The humidity-shield reduces the effects of hydrolysis, but hydrophobic effect is not as long lasting as the pre-treatment method due to usage, creasing and weight increment, however, it exhibits a marginally higher reactive force over the pre-treatment method.

### Experiments

### 1) Stab tests

Four samples of Kevlar® fabric are prepared and impregnated with varying percentage of the colloidal gel in accordance with the first embodiment. The sample fabrics are weighed before impregnation and again after impregnation and drying to ascertain the increase in overall mass. These layers are subjected to knife drop test on a rail rig with five-witness papers interlaced with polycell foam. Collectively, the five layers of foam are further supported by 8cm thick polyethylene foam as stipulated in the NIJ stab test procedure. The double-edged knife of carbon steel is dropped from 30 cm with a weight of 3.5kg. The samples are tested and compared with neat Kevlar® fabric that is untreated with the process described herein and levels of penetration are recorded.

### Sample 1

Kevlar® K29 of density 285g/sq m, weft and wrap 28X28 plain weave, year of manufacture 1997, is cut into 25cm X 25 cm size. Gel untreated silica content 61% (prior art). It is impregnated with about 20% of the gel when dried using the roller press process. The impregnation % is based on the difference in weight of the Kelvar® before impregnation and impregnated Kelvar® is dried. The weight % would thus indicate the amount of impregnation which is controlled by adjusting the position and speed of the roller pairs 206. The packed six layers of fabric have an area density of 2.076 kg/sq m when weighed after impregnation and drying.. This sample is used as a reference sample as it has silica content of the prior art.

### Sample 2

Kevlar K29 of density 285g/sq m, weft and wrap 28X28 plain weave, year of manufacture 1997, is cut into 25cm X 25 cm size. It is impregnated with about 15% of the gel when dried using the roller press process. The packed six layers of fabric have an area density of 1.989 kg/sq m when weighed after impregnation and drying. Gel hydrophobic silica content 69%.

### Sample 3

Kevlar K29 of density 285g/sq m, weft and wrap 28X28 plain weave, year of manufacture 1997, is cut into 25cm X 25 cm size. It is impregnated with 11 % of the gel when dried using the roller press process. The packed six layers of fabric have an area density of 1.902 kg/sq m when weighed after impregnation and drying. Gel hydrophobic silica content 68%.

### Sample 4

Kevlar K29 of density 285g/sq m, weft and wrap 28X28, year of manufacture 1997, is cut into 25cm X 25 cm size. It is impregnated with 5.7% of the gel when dried using the roller press process. The packed six layers of fabric have an area density of 1.807 kg/sq m when weighed after impregnation and drying. Gel hydrophobic silica content 72%.

| Samples | Areal Density kg/sqm | Layers Penetration |
|---|---|---|
| Sample 1 | 2.076 | 2 |
| Sample 2 | 1.989 | 2 |
| Sample 3 | 1.902 | 2 |
| Sample 4 | 1.807 | 3 |
| Neat untreated Sample | 1.710 | 6 |

The experiments demonstrated the weight savings of the silica gel prepared in accordance with the described embodiment with a lighter areal density but little or no compromise to performance over the prior art neat fabric. As is apparent, the fabric (sample 4) treated with 5.7% of gel has almost similar resistant performance when compared with one treated with 20% of prior art gel but with an almost 45% improvement in areal density performance ratio improvement.

### 2) Ballistic Tests

Five samples of targets are prepared using the same Kevlar K29 fabric of density 285g/sq m, 28X28 weft and wrap, plain weave pattern, with three samples produced in accordance with the second embodiment, one sample produced in accordance with the first embodiment and another sample untreated. All targets are 20 layer plies, 25cm X 25cm, mounted on a steel frame and strapped to a 25cm X 25cm X 25cm cube of Roma Plastalina clay serving as a witness. All targets are shot with a Colt 1911 hand pistol with S & B Czech made 9mm Luger round of 124 grains and a muzzle velocity averaging 1204 feet per second (about 367m/s) from a distance of 4.6m. Each sample is treated with various levels of gel concentrations with one neat (sample not treated) serving as a control and one treated to possess the silica content per the prior art. The clay is removed and the backface signature is measured for diameter and a quadrant is cut through the centre of the defamation in the clay and measured for depth of indentation as a trauma depth witness.
Sample 1 - Not Treated
Sample 2 - 20% prior art gel with 63% untreated silica - prior art
Sample 3 -17.89% gel with 66% untreated silica and coating of silicone fluid
Sample 4 - 5.67% gel with 66% untreat silica and coating of silicone fluid
Sample 5 - 8% gel with 72% treated silica (prepared in accordance with the first embodiment)

| Sample | Ceramic type and percentage in Gel | % Treatment | BFS Diameter | BFS Depth | % depth improvement |
|---|---|---|---|---|---|
| 1 | 0% | 0% | 59mm | 30mm | Control |
| 2 | Untreated 63% | 20% | 67mm | 19mm | 37.33% |
| 3 | Untreated 66% | 17.89% | 65mm | 19mm | 37.33% |
| 4 | Untreated 66% | 5.67% | 56mm | 22mm | 26.67% |
| 5 | Treated 72% | 7.88% | 66mm | 24mm | 20% |

The results show three layers of penetration with the exception of the neat sample which has four layers of penetration. However, the ballistic test at NIJ level IIA conditions also showed that the fabric impregnated with the silica content of the prior art and the second embodiment has similar levels of trauma reduction compared to existing known soft armours. However, the protective fabric produced according to the present embodiment has lower weight, bulk and lower hydrolysis risks but with similar ballistic improvements over the neat Kevlar®.

The finished protective fabric can be adapted for numerous applications. For example, body armour such as a bullet/stab proof vest can be produced from the protective fabric. After marking the desired shape and size, the fabric is cut using a hardened shear or an industrial cutting device to produce the required vest. Also, the fabric can be cut and made into removable inserts to compliment carrier vests made of normal fabric to achieve the required threat protection as the manufacturer sees fit For enhanced protection, multiple layers of the fabric can be created by joining layers of fabric together. Further, single layer or multiple layer modules can be sewn or sealed into a fabric bag having punched rings that can be held up by rigging or sewn into canvass covering for soft skinned vehicles and trucks, cargo bays of aircraft to provide the required sound, knock and threat protection. The modules can similarly be provided in metal or plastic containers that can be mounted to sides of military or civilian tracked vehicles or wheeled vehicles to provide ballistic protection and also to assist in channelling of air and dust to the rear of the moving vehicle to prevent dust gathering around the mid drift of the vehicle movement that could be directed into the vehicle's engine air intake system, causing excessive wear to the internal working parts of the engine. Due to the flexibility of the fabric, fabric modules can also be fastened, by adhesive or other conventional means, to the inside of soft skinned vehicles (eg. security vehicles) to provide the necessary ballistic protection. It would be apparent that this can be used for military as well as civilian vehicles.

As mentioned above, layers of fabrics can be stacked and arranged to form a flexible module. Preferably, the layers are sealed by using a vacuum sealing technique. It is recommended that a high vacuum sealer be used with a negative pressure of at least 5 bar to achieve good and lasting sealing.

In the alternative, the layers can be sandwiched between two nylon sheets that had one side lined with PVC to form a packaging for the fabric layers. The packaging has nylon surfaces facing each other and the fabric. The edges can be completely glued, heat pressed or ultrasonically sealed to form an airtight protective package.

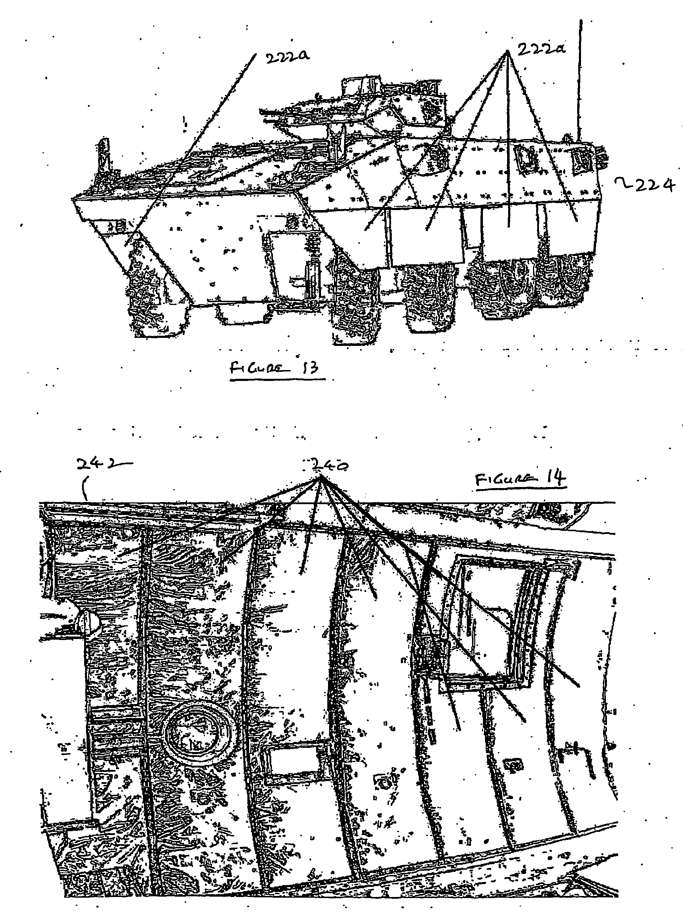

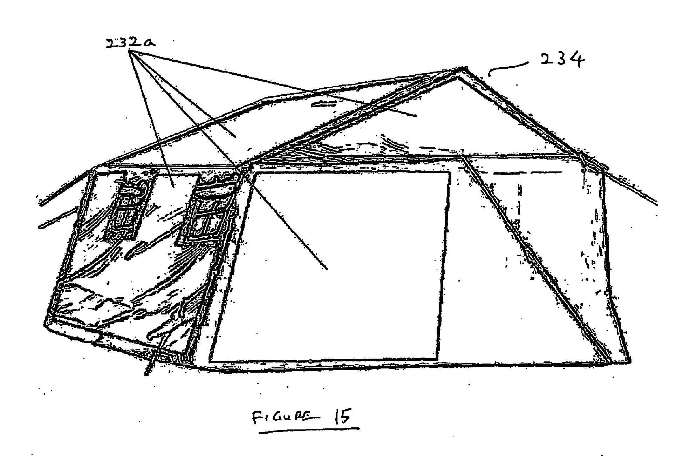

Figures 13 to 17 illustrate examples of where the protective fabric proposed in the described embodiment can be used. Figure 13 shows a typical tracked armour vehicle 220 and protective panels 222, made from the protective fabric of the described embodiment, line the sides of the vehicles to provide the required ballistic protection. Also, the side panels reduce the amount of dirt thrown up by the moving tracks and directing any vortex created when the vehicle is moving to the rear, thus alleviating fine dust particles from being directed to the vehicle's engine. Figure 15 illustrates similar side protective panels 222a being used in a wheeled armour vehicle 224.

Figure 14 shows a typical soft-skinned truck vehicle 230 having a canvas roof 232. It is proposed that the canvas roof 232 is made from the protective fabric thus protecting the passengers or goods carried by the vehicle 230 against ballistic threats from small arms. The flexibility of the protective fabric also allows the canvas 230 to be stowed away so that it will be out of the way when logistics and ventilation requirements arises. Figure 17 extends the application of Figure 14 to a tentage 234 by using the protective fabric 232a to protect the personnel and equipment therein from ballistic treats and fragments from small arms.

Figure 16 shows how acoustic panels can be made from the protective fabric of the described embodiment to form soft ballistic panels 240 to protect an aircraft 242 against small arms fire from outside the aircraft. It also protects the aircraft's body against ballistic threats from inside the aircraft such as small arms accidental discharge or minor explosive accidents which can damage the aircraft's integrity and operation.

The described embodiment should not be construed as limitative. The inventor envisages that the pre-treatment or the post treatment step of making the fabric hydrophobic can be made independent and separate from the colloidal gel preparation for increasing the particle count in the gel. For example, the treatment steps to make the fabric hydrophobic can be used for prior art fabrics which does not require such a high particle count but require hydrophobicity to increase the lifespan of the fabric. Conversely, for greater threat protection, it might be useful to increase the particle count using the colloidal gel preparation proposed herein but not the treatment steps to make the fabric hydrophobic.

In the described embodiments, polyethylene glycol is described as the liquid carrier fluid but it is apparent that other liquid can be used for example, ethylene glycol or water, however, water is not preferred as it is more volatile and less viscous than polyethylene glycol and also weakens aramids via hydrolysis.

Co-solvent is preferably added to aid the dispersion process after shearing the glycol and particles for a period of time at varying speeds and only after further dispersion is not possible due to the increased viscosity of the colloidal gel. However, it is envisaged that the co-solvent can be added when shearing the mixture at a constant speed although this might take longer to disperse the particles then if the shearing was performed at varying speeds or even when maximum saturation is not reached.

Shearing is described as the preferred method in both embodiments. However, other suitable dispersion techniques such as ultrasonic waves can also be used.

In the described embodiments, silica or silicon dioxide is selected as the colloidal particles but other ceramic particles can be used such as Aluminium Oxid, Zirconia family or Titanium Dioxide although silica is normally preferred due to its low cost, low toxicity and easy availability.

Kevlar® is used as an example in the described embodiment but the present invention is also applicable for other aramid fabrics such as ballistic Nylon. To further eradicate hydrolysis, it is proposed that fabrics of various weave patterns made up of bunched yarns of microfibres of extended chain polyethylene (ECPE) can be used instead of aramid fabrics although ECPE are more costly. However, ECPE or sometimes called HPPE fabrics of fine fibres are relatively easier to coat, lighter in weight and much stronger in performance where heat presence above 90 degrees Celsius is not a concern.

Having now fully described the invention, it should be apparent to one of ordinary skill in the art that many modifications can be made hereto without departing from the scope as claimed.

## Claims

1. A method of producing a colloidal gel for protective fabrics, the method comprising the steps of:
i) dispersing an amount of colloidal particles in a carrier liquid to form a colloidal suspension;
ii) diluting the colloidal suspension; and
iii) adding further colloidal particles which are dispersed to form a colloidal gel which has a higher concentration of dispersed colloidal particles than the suspension prior to dilution.

2. A method according to claim 1, further comprising the step of: at step (i), dispersing the colloidal particles at varying speeds to disperse the colloidal particles.

3. A method according to claim 2 further comprising the step of:
dispersing the liquid at a first speed as the particles are added until a predetermined stage is reached; and
dispersing the liquid at a second speed without further adding of the particles, wherein the second speed is higher than the first speed.

4. A method according to claim 3, further comprising the step of, when the predetermined stage is reached, dispersing the liquid without further adding of the particles for an amount of time before dispersing at the second speed.

5. A method according to claim 3 or 4, further comprising the step of dispersing the liquid at a third speed after dispersing at the second speed for an amount of time, the third speed being higher than the second speed.

6. A method according to claim 5, further comprising the steps of repeating the dispersion at the first, second and third speeds until the said amount of colloidal particles are dispersed in the carrier liquid.

7. A method according to any of the preceding claims, further comprising the step of, at step (iii), dispersing the colloidal particles at a speed higher than the dispersing step (i).

8. A method according to claim 5 or 6, further comprising the step of, at step (iii), dispersing the colloidal particles at a speed higher than the third speed.

9. A method according to any of the preceding claims, wherein the said amount is the maximum amount of colloidal particles that can be dispersed in the carrier liquid prior to dilution step (ii).

10. A method according to any of the preceding claims, wherein the dispersing steps (i) and (iii) include shearing the carrier liquid and the colloidal particles.

11. A method according to any of the preceding claims, wherein total amount of colloidal particles added in relation to the carrier liquid is more than 65% by weight.

12. A method according to any of the preceding claims, wherein the colloidal parades have aggregate sizes of 0.2 to 0.35 microns.

13. A method according to any of the preceding claims, wherein the liquid has a molecular weight of between 100 and 300.

14. A method according to any of the preceding claims wherein the diluting step includes adding a co-aohrent to the suspension which is between 100% to 300% of the volume of the carrier fluid.

15. A method according to claim 14, wherein the co-solvent is ethanol or methanol.

16. A method according to any of the preceding claims, wherein the carrier fluid is selected from the group comprising polyethylene glycol and ethylene glycol.

17. A method according to any of the preceding claims, wherein the fabric includes aramid fabric.

18. A method according to any of the preceding claims, further comprising the step of coating the colloidal particles with silicone fluid prior to the particles being dispersed at steps (i) and (iii).

19. A method of producing protective fabrics comprising the step of:
impregnating a fabric with a colloidal gel produced by a method according to claim 18.

20. A method according to claim 19, further comprising the step of:
diluting the colloidal gel,
wetting the fabric with the diluted fluid, and
drying the fabric to remove the co-solvent from the fabric.

21. A method according to claim 20, wherein the fabric is dried using a hot air blower.

22. A method according to any of claims 19 to 21, wherein the colloidal gel is diluted with up to three parts of solvent.

23. A method of producing protective fabrics comprising the step of:
impregnating a fabric with colloidal gel produced by a method according to any of claims 1 to 17.

24. A method according to claim 23, further comprising the step of:
diluting the colloidal gel,
wetting the fabric with the diluted fluid, and
drying the fabric to remove the co-solvent from the fabric.

25. A method according to claim 24, further comprising the step of wetting the dried fabric with a sealing fluid selected-from a group comprising dimethyldichlorosilane, hexamethyldisilazane and silicone fluids.

26. A method according to claim 18 or claim 25, wherein the silicone fluid or sealing fluid includes dimethyl silicone fluid.

27. A stab or bullet resistant vest comprising a protective fabric produced by a method according to any of claims 19 to 26.

28. A vehicle or an aircraft comprising a protective fabric produced by a method according to any of claims 19 to 26.

29. A protective fabric impregnated with colloidal gel having suspended particles of more than 65% by weight.

## Patentansprüche

1. Verfahren zur Herstellung eines kolloidalen Gels für Schutzgewebe, wobei das Verfahren die Schritte umfasst:
i) Dispergieren einer Menge von kolloidalen Partikeln in einer Trägerflüssigkeit zur Bildung einer kolloidalen Suspension;
ii) Verdünnen der kolloidalen Suspension; und
iii) Hinzufügen weiterer kolloidaler Partikel, die dispergiert sind, zur Bildung eines kolloidalen Gels, welches eine höhere Konzentration an dispergierten kolloidalen Partikeln aufweist als die Suspension vor der Verdünnung.

2. Verfahren gemäß Anspruch 1, ferner umfassend den Schritt: bei Schritt (i) Dispergieren der kolloidalen Partikel bei unterschiedlichen Geschwindigkeiten um die kolloidalen Partikel zu dispergieren.

3. Verfahren gemäß Anspruch 2, ferner umfassend den Schritt:
Dispergieren der Flüssigkeit unter Hinzufügen der Partikel bei einer ersten Geschwindigkeit bis ein vorher festgelegter Grad erreicht ist; und
Dispergieren der Flüssigkeit bei einer zweiten Geschwindigkeit ohne weiteres Hinzufügen von Partikeln, wobei die zweite Geschwindigkeit höher als die erste Geschwindigkeit ist.

4. Verfahren gemäß Anspruch 3, ferner umfassend den Schritt - sobald der vorher festegelegte Grad erreicht ist - des Dispergierens der Flüssigkeit für eine Zeitdauer ohne weiteres Hinzufügen von Partikeln bevor bei der zweiten Geschwindigkeit dispergiert wird.

5. Verfahren gemäß den Ansprüchen 3 oder 4, ferner umfassend den Schritt des Dispergierens der Flüssigkeit bei einer dritten Geschwindigkeit nach dem Dispergieren bei einer zweiten Geschwindigkeit für eine Zeitdauer, wobei die dritte Geschwindigkeit höher als die zweite Geschwindigkeit ist.

6. Verfahren gemäß Anspruch 5, ferner umfassend die Schritte des Wiederholens des Dispergierens bei einer ersten, zweiten und dritten Geschwindigkeit, bis die besagte Menge an kolloidalen Partikeln in der Trägerflüssigkeit dispergiert ist.

7. Verfahren gemäß den vorhergehenden Ansprüchen, ferner umfassend den Schritt - bei Schritt (iii) - des Dispergierens der kolloidalen Partikel bei einer höheren Geschwindigkeit als im Dispergierungsschritt (i).

8. Verfahren gemäß den Ansprüchen 5 oder 6, ferner umfassend den Schritt - bei Schritt (iii)-des Dispergierens der kolloidalen Partikel bei einer höheren Geschwindigkeit als die dritte Geschwindigkeit.

9. Verfahren gemäß den vorhergehenden Ansprüchen, wobei die besagte Menge die maximale Menge an kolloidalen Partikeln ist, die in der Trägerflüssigkeit vor der Verdünnungsstufe (ii) dispergiert werden kann.

10. Verfahren gemäß den vorhergehenden Ansprüchen, wobei die Dispergierungsschritte (i) und (iii) das Scheren der Trägerflüssigkeit und der kolloidalen Partikel einschließen.

11. Verfahren gemäß den vorhergehenden Ansprüchen, wobei die Gesamtmenge der hinzugefügten kolloidalen Partikel bezüglich der Trägerflüssigkeit größer als 65 Gew.-% ist.

12. Verfahren gemäß den vorhergehenden Ansprüche, wobei die kolloidalen Partikel Gesamtgrößen von 0,2 bis 0,35 µm aufweisen.

13. Verfahren gemäß den vorhergehenden Ansprüchen, wobei die Flüssigkeit ein Molekulargewicht zwischen 100 und 300 besitzt.

14. Verfahren gemäß den vorhergehenden Ansprüchen, wobei die Verdünnungsstufe das Hinzufügen eines zusätzlichen Lösungsmittels zu der Suspension umfasst, welches zwischen 100 und 300 % des Volumens der Trägerflüssigkeit besitzt.

15. Verfahren gemäß Anspruch 14, wobei das zusätzliche Lösungsmittel Ethanol oder Methanol ist.

16. Verfahren gemäß den vorhergehenden Ansprüchen, wobei die Trägerflüssigkeit aus der Gruppe umfassend Polyethylenglykol und Ethylenglykol ausgewählt ist.

17. Verfahren gemäß den vorhergehenden Ansprüchen, wobei das Gewebe Aramidfasern umfasst.

18. Verfahren gemäß den vorhergehenden Ansprüchen, ferner umfassend den Schritt des Überziehens der kolloidalen Partikel mit Silikonflüssigkeit vor dem Dispergieren der Partikel in den Schritten (i) und (iii).

19. Verfahren zur Herstellung von Schutzgeweben umfassend die Schritte:
Imprägnieren eines Gewebes mit einem kolloidalen Gel, welches nach einem Verfahren gemäß Anspruch 18 hergestellt ist.

20. Verfahren gemäß Anspruch 19, ferner umfassend den Schritt:
Verdünnen des kolloidalen Gels,
Befeuchten des Gewebes mit der verdünnten Flüssigkeit und
Trocknen des Gewebes, um das zusätzliche Lösungsmittel von dem Gewebe zu entfernen.

21. Verfahren gemäß Anspruch 20, wobei das Gewebe unter Verwendung eines Heißluftgebläses getrocknet wird.

22. Verfahren gemäß den Ansprüchen 19 bis 21, wobei das kolloidale Gel mit bis zu drei Teilen des Lösungsmittels verdünnt wird.

23. Verfahren zur Herstellung von Schutzgeweben umfassend die Schritte:
Imprägnieren eines Gewebes mit kolloidalem Gel, welches durch ein Verfahren gemäß den Ansprüchen 1 bis 17 hergestellt ist.

24. Verfahren gemäß Anspruch 23, ferner umfassend den Schritt:
Verdünnen des kolloidalen Gels,
Befeuchten des Gewebes mit der verdünnten Flüssigkeit, und
Trocknen des Gewebes, um das zusätzliche Lösungsmittel von dem Gewebe zu entfernen.

25. Verfahren gemäß Anspruch 24, ferner umfassend den Schritt des Befeuchtens des getrockneten Gewebes mit einer Dichtungsflüssigkeit ausgewählt aus einer Gruppe umfassend Dimethyldichlorosilan, Hexamethyldisilazan und Silikonflüssigkeiten.

26. Verfahren gemäß den Ansprüchen 18 oder 25, wobei die Silikonflüssigkeit oder Dichtungsflüssigkeit Dimethylsililconflüssigkeit einschließt.

27. Stich- oder schusssichere Weste umfassend ein Schutzgewebe, welches durch ein Verfahren gemäß den Ansprüchen 19 bis 26. hergestellt ist.

28. Fahrzeug oder Fluggerät umfassend ein Schutzgewebe, welches nach einem Verfahren gemäß den Ansprüchen 19 bis 26 hergestellt ist.

29. Schutzgewebe, welches mit einem kolloidalen Gel imprägniert ist, das suspendierte Partikel mit mehr als 65 Gew.-% aufweist.

## Revendications

1. Procédé de production d'un gel colloïdal pour des tissus de protection, le procédé comprenant les étapes consistant à :
i) disperser une certaine quantité de particules colloïdales dans un liquide porteur pour former une suspension colloïdale ;
ii) diluer la suspension colloïdale ; et
iii) ajouter des particules colloïdales supplémentaires qui sont dispersées afin de former un gel colloïdal qui a une concentration plus élevée en particules colloïdales dispersées que la suspension avant dilution.

2. Procédé selon la revendication 1, comprenant en outre l'étape consistant à : au niveau de l'étape (i), disperser les particules colloïdales à des vitesses variables pour disperser les particules colloïdales.

3. Procédé selon la revendication 2 comprenant en outre les étapes consistant à :
Disperser le liquide à une première vitesse lorsque les particules sont ajoutées jusqu'à ce qu'un stade prédéterminé soit atteint ; et
disperser le liquide à une deuxième vitesse sans ajouter en outre des particules, dans lequel la deuxième vitesse est plus élevée que la première vitesse.

4. Procédé selon la revendication 3, comprenant en outre l'étape consistant à, lorsque le stade prédéterminé est atteint, disperser le liquide sans ajouter en outre les particules pendant une certaine quantité de temps avant dispersion à la deuxième vitesse.

5. Procédé selon la revendication 3 ou 4, comprenant en outre l'étape consistant à disperser le liquide à une troisième vitesse après dispersion à la deuxième vitesse pendant une certaine quantité de temps, la troisième vitesse étant plus élevée que la deuxième vitesse.

6. Procédé selon la revendication 5, comprenant en outre les étapes consistant à répéter la dispersion à la première, la deuxième et la troisième vitesses jusqu'à ce que ladite quantité de particules colloïdales soit dispersée dans le liquide porteur.

7. Procédé selon l'une quelconque des revendications précédentes, comprenant en outre l'étape consistant à, au niveau de l'étape (iii), disperser les particules colloïdales à une vitesse plus élevée que celle de l'étape de dispersion (i).

8. Procédé selon la revendication 5 ou 6, comprenant en outre l'étape consistant à, au niveau de l'étape (iii), disperser les particules colloïdales à une vitesse plus élevée que la troisième vitesse.

9. Procédé selon l'une quelconque des revendications précédentes, dans lequel ladite quantité est la quantité maximale de particules colloïdales qui peuvent être dispersées dans le liquide porteur avant l'étape de dilution (ii).

10. Procédé selon l'une quelconque des revendications précédentes, dans lequel les étapes de dispersion (i) et (iii) comportent l'étape consistant à cisailler le liquide porteur et les particules colloïdales.

11. Procédé selon l'une quelconque des revendications précédentes, dans lequel la quantité totale de particules colloïdales ajoutée en rapport avec le liquide porteur est supérieure à 65 % en poids.

12. Procédé selon l'une quelconque des revendications précédentes, dans lequel dans lequel les particules colloïdales ont des tailles globales de 0,2 à 0,35 microns.

13. Procédé selon l'une quelconque des revendications précédentes, dans lequel le liquide a une masse moléculaire comprise entre 100 et 300.

14. Procédé selon l'une quelconque des revendications précédentes, dans lequel l'étape de dilution comporte l'étape consistant à ajouter un cosolvant à la suspension, qui représente entre 100 % et 300 % du volume du fluide porteur.

15. Procédé selon la revendication 14, dans lequel le cosolvant est de l'éthanol ou du méthanol.

16. Procédé selon l'une quelconque des revendications précédentes, dans lequel le fluide porteur est choisi dans le groupe comprenant du polyéthylèneglycol et de l'éthylèneglycol.

17. Procédé selon l'une quelconque des revendications précédentes, dans lequel le tissu comporte un tissu aramide.

18. Procédé selon l'une quelconque des revendications précédentes, comprenant en outre l'étape consistant à enduire les particules colloïdales d'un fluide à la silicone avant que les particules ne soient dispersées au niveau des étapes (i) et (iii).

19. Procédé de production de tissus de protection comprenant l'étape consistant à :
imprégner un tissu d'un gel colloïdal produit grâce à un procédé selon la revendication 18.

20. Procédé selon la revendication 19 comprenant en outre les étapes consistant à :
diluer le gel colloïdal,
mouiller le tissu à l'aide du fluide dilué, et
sécher le tissu pour retirer le cosolvant du tissu.

21. Procédé selon la revendication 20, dans lequel le tissu est séché en utilisant un dispositif de soufflage d'air chaud.

22. Procédé selon l'une quelconque des revendications 19 à 21, dans lequel le gel colloïdal est dilué dans une quantité de solvant allant jusqu'à trois fois celle du gel.

23. Procédé de production de tissus de protection comprenant l'étape consistant à :
imprégner un tissu d'un gel colloïdal produit grâce à un procédé selon l'une quelconque des revendications 1 à 17.

24. Procédé selon la revendication 23, comprenant en outre les étapes consistant à :
diluer le gel colloïdal,
mouiller le tissu à l'aide du fluide dilué, et
sécher le tissu pour retirer le cosolvant du tissu.

25. Procédé selon la revendication 24, comprenant en outre l'étape consistant à :
mouiller le tissu séché à l'aide d'un fluide d'étanchéification choisi dans le groupe comprenant du diméthyldichlorosilane, de l'hexaméthyldisilazane et des fluides à la silicone.

26. Procédé selon la revendication 18 ou 25, dans lequel le fluide à la silicone ou le fluide d'étanchéification comporte un fluide à base de diméthyl silicone.

27. Gilet pare-balles ou résistant aux coups de couteau comprenant un tissu de protection produit grâce à un procédé selon l'une quelconque des revendications 19 à 26.

28. Véhicule ou aéronef comprenant un tissu de protection produit grâce à un procédé selon l'une quelconque des revendications 19 à 26.

29. Tissu de protection imprégné d'un gel colloïdal disposant de particules en suspension dans une quantité supérieure à 65 % en poids.
